# EUROPEAN PATENT APPLICATION

(11) **EP 3 511 880 A1**
(43) Date of publication of application: **17.07.2019**
(21) Application number: 18151509.9
(22) Date of filing: 12.01.2018
(51) Int. Cl.: G06Q 10/06

(54) **METHOD FOR VALIDATING A PROJECT DEFINITION PROCESS**

(71) Applicant: Stock, Mirko, 31180 Rouffiac-Tolosan (FR)
(72) Inventor: Stock, Mirko, 31180 Rouffiac-Tolosan (FR)
(74) Representative: Office Kirkpatrick

(57) **Abstract**

According to the method, one models the process using a determined graph which comprises, in series, a strategy block (1), a tactic block (4), at least one action block (5), a means block (6), a solution block (3), with a supply block (2) also being located upstream from the solution block (3), the action block (5) being also linked to an outcome block (7), and, in order to decide the validation, analysis is limited to each one of the blocks, thus shortening the time required for making a validation decision.

## Description

The invention of the present application relates to a method for validating a project definition process with the aid of a functional diagram, or block diagram, intended to shorten the time that a decision-maker must spend before making his decisions after a counselor, a collaborator, or an assistant has provided him with proposals for achieving an objective in keeping with a given strategy.

This functional diagram, or graph, enables the decision-maker to focus his questions - posed to a person who is the source of a proposal for an objective and who must provide additional information in order for sound decisions to be made - only on the points of importance, thereby saving him time.

This functional graph is in fact the expression of a modeling of the project definition process, more precisely a navigated validation process.

The invention arose from the inventor's establishment that any project definition process could be modeled and that the same model - that of the method according to the invention - could perfectly characterize all projects.

The invention of the present application is thus a problem invention, and this problem is eminently technical, since it is located in space-time, in the same sense as relativity, without mentioning a cost killing effect.

Once again, the reader of the present description is asked not to be surprised at the nature of the invention. With the model that has been developed and which is an attribute of the present temporal solution, the method according to the invention therefore does in its essence possess the technical nature required by law.

The graph on which the method according to the invention is based can be defined as a simplified graphic representation of the processes involving a plurality of units or steps represented by blocks connected by lines of action.

In other words, the invention enables the functional relationships between the various elements of a process.

And the fact that the modeling of the method of the present application can be applied just as well to industrial or technical processes as to non-technical processes such as economic processes, household processes, etc., does not mean that the method does not have the technical nature required in order to be protected by a patent. This is high-level data modeling.

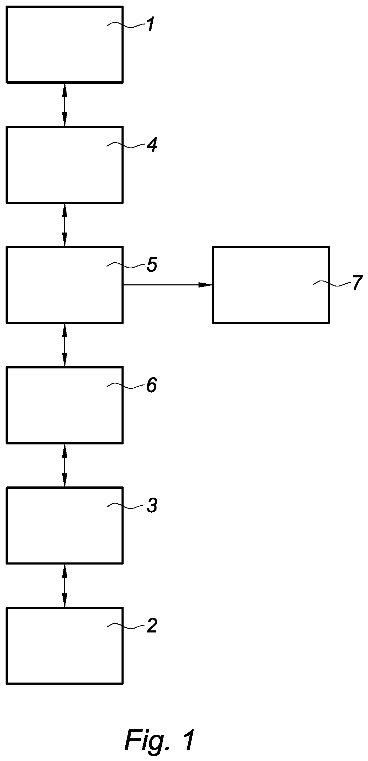

According to the functional graph of the method according to the invention, and with reference to Fig. 1,
at one end of the graph, we have
- a "strategy" or "objective" block 1, and
at the other end, we have
- a "supply" block 2.
Just downstream, or upstream - to be explained below - from the "supply" block 2, there is a "solution" block 3. In this context, "solution" is to be understood as being the specific choice to supply a mean.
Just downstream from the "strategy" block 1, there is a "tactic" block 4. Downstream from the "tactic" block 4 is an "action" block 5, downstream from which a "means" or "measures" block 6 is located.
Downstream of block 6 is the solution block 3. The "action" block 5 is also linked to an "outcome" block 7.

The invention of the present application thus concerns a method for validating a project definition process according to which, one models the process using a determined graph which comprises, in series, a strategy block, a tactic block, at least one action block, a means block, a solution block, with a supply block also being located upstream from the solution block, the action block being also linked to an outcome block, and, in order to decide the validation, analysis is limited to each one of the blocks, thus shortening the time required for making a validation decision.

The shortening of the time required for making a decision by a decision-maker who is validating a project definition process is enabled by the modeling of the process according to the functional graph of Fig. 1. After all, this graph comprises only six blocks, located on either side of the solution block, on which the decision-maker must focus his questions to the party that proposed the project to him.

This number of blocks is very low and thus results in a rapid decision, sparing the decision-maker from consulting all of the documents and other data on which the project is based.

Furthermore, it should be understood that the navigated validation process of the instant case enables the decision-maker to consider any block of the graph to start with, prior to then navigating within the whole graph along any path for more complex analysis and queries. All blocks are intercorrelated. This is why, as mentioned above, it is written that the solution block is located downstream or upstream from the supply block and this is true for all intermediate blocks
between block 1 and 2.

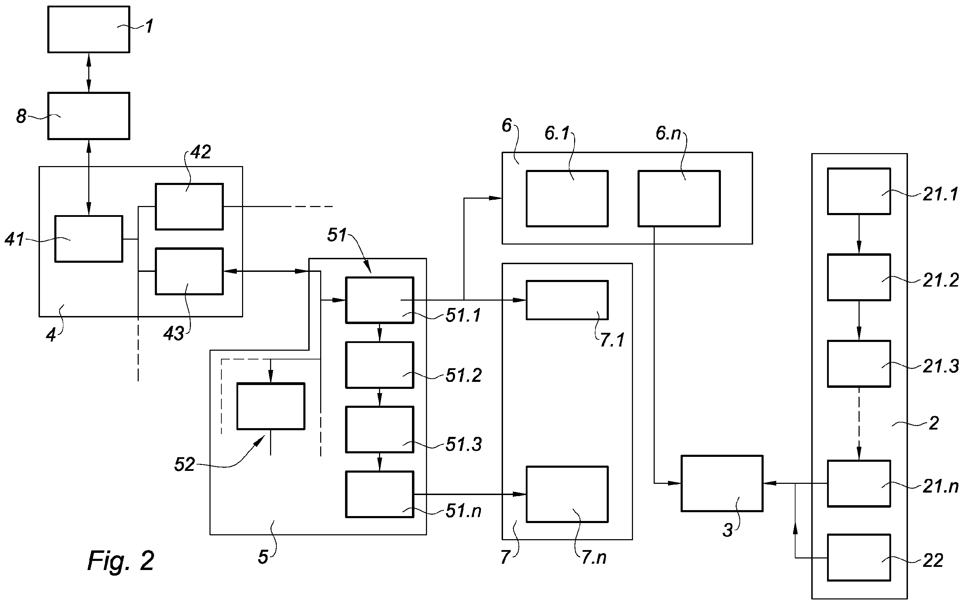

With reference to Fig. 2, the "supply" block 2 can be broken down into the sub-blocks "suppliers" 21.1 ... 21.n and "inventory" 22.

The "tactic" block 4 can comprise a first center block 41 and be followed, downstream, by the secondary "tactic" sub-blocks 42, 43, each followed by an "action" block 5. Each action block 5 comprises, in parallel, several series 51, 52 of action sub-blocks 51.1, 51.2, 51.3, 51.n .... Each action sub-block is linked to a sub-block 7.1 ... 7.n of outcome block 7. The means block 6 comprises sub-blocks 6.1 ... 6.n linked to sub-blocks of action block 5 and is linked to solution block 3.

An "adaptation" block 8 can be inserted between the "strategy" block 1 and the "tactic" block 4 in order to monitor and to measure the adequacy of the tactic to the strategy of the project.

To facilitate understanding of the invention, some concrete examples will be presented and pinned to the functional diagrams developed above in order to demonstrate the eminently practical nature thereof.

### Example 1

This involves the making of a pizza pie.
The objective and strategy 1 are to feed a gathering of people with a healthful food.
Different tactics 42, 43 can be imagined:
- make the pizza oneself 43,
- order one and eat it at home 42,
- go to eat it at a restaurant.

If one chooses to make it oneself, the actions 5 to be taken include
- selecting the kind of pizza for the number of people to feed 51.1,
- selecting the recipe and preparing for the shopping 51.2,
- organizing the purchasing steps 51.3,
- preparing the cooking steps.

The means 6 for carrying out the actions 5 are
- the selection of the cook 6.1,
- the selection of the ingredients of the pizza 6.n,
- selecting the means of payment (cash, credit card, checks, wiring, etc.),
- selecting he means for transporting the products,
- defining the equipment and devices for preparing the pizza (oven, mixer, and other kitchen utensils) 6.n.

Finally, all that is left, prior to be able, for instance, to put the pizza in the heating device 3, is to
- decide to buy an oven, and not take the one which is at home 21.1,
- check the list of ovens proposed by the merchant 21.2,
- select the type of oven which is needed 21.n,
- decide to take material at the disposal at home 22.

The outcome of block 7 is i) the number of eaters and the selection of the pizza 7.1 and ii) the pizza itself 7.n.

It is thus clear that the modeling of the invention applies perfectly well to the process of making a cooked dish.

### Example 2

It relates to a process for running a plant, namely for increasing its profitability and the safety of its operation, this being the objective and the strategy of the model and the first block 1 of the diagram.

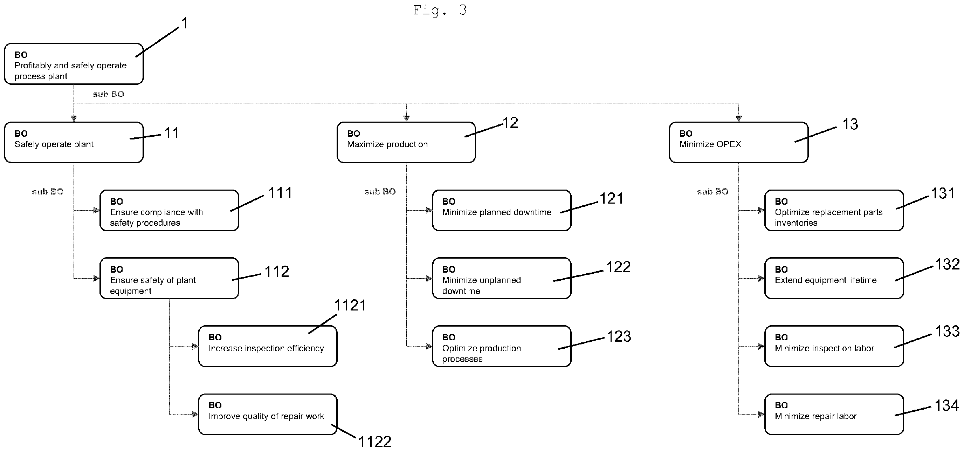

In this case of figure 3, unlike the pizza pie case, there are several sub objectives and sub-blocks : safety of the operation 11, maximalization of the production 12 and minimizing the costs 13.

Again, each sub-block is broken down into several underblocks.

Sub-block 11 includes an underblock 111, to the compliance with the safety procedures, and an underblock 112, to the safety of the equipment of the plant.

Sub-block 12 includes an underblock 121, to the minimization of the planned downtime, an underblock 122, to the minimization of the unplanned downtime, and an underblock 123, to the optimization of the production processes.

Sub-block 13 includes an underblock 131, to the optimization of the replacement parts and inventories, an underblock 132, to the extension of the lifetime of the equipment, an underblock 133, to the minimization of the inspection labor, and an underblock 134, to the minimization of the repair labor.

It is clear that all above defined blocks of the diagram relate either to the profitability or the safety of the plant.

Each above defined underblock is followed, in the diagram of the invention, by blocks similar to those used for the process for making a pizza pie.

### Example 3

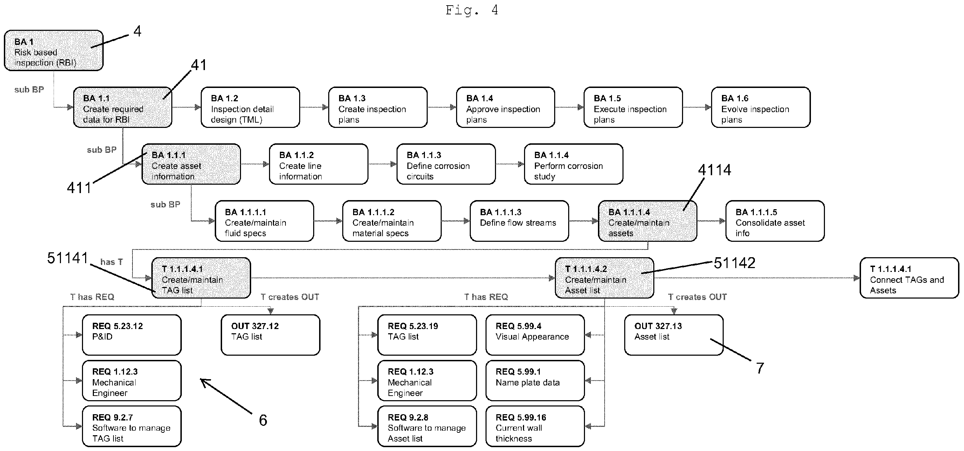

It relates again to a process for running a plant, but here to the inspection of the risks, this being the tactic of the model and the first block 4 of the diagram of figure 4. Block 4 includes a series of sub-blocks, among them a first one sub-block 41, to the creation of data required for the risk based inspection (RBI). Taking this last sub-block 41 into consideration, it is broken down into a series of underblocks, among them, a first one, underblock 411, to the creation of asset information.

Each underblock includes further intermediate blocks, among them, a fourth one 4114, to the creation and maintaining of the assets.

Finally, in this case, each intermediate block includes a last series of extreme action blocks, and, here, extreme action block 51141, to the creation and maintaining of a TAG list, followed by extreme action block 51142, to the creation and maintaining of an asset list.

Linked to the extreme action block 51141 are several mean block 6 (mechanical engineer, software to manage ...).

The outcome block 7 relates to the asset list.

### Example 4

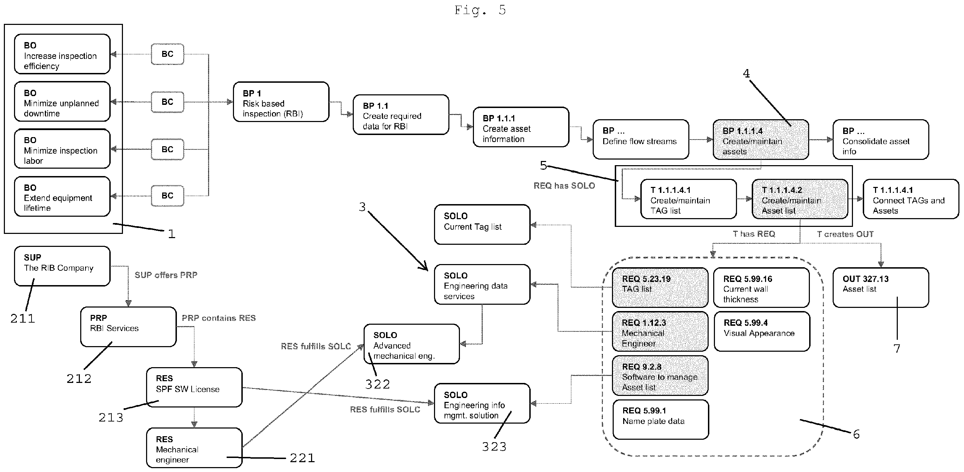

In this example, the assembly 1 of blocks 1121 of figure 3, to the increase of the inspection efficiency included within block 112, block 122, to the minimization of the unplanned downtime of figure 3, block 132, to the extension of the lifetime of the equipment, and block 133, to the minimization of the inspection labor, of figure 3 are jointly defining the objectives and strategies of the diagram of figure 5, whereas block 4114 of figure 4, to the creation and maintaining of the assets, is tactic block 4 and block 51142 of figure 4, to the creation and maintaining of an asset list, is included within action block 5 of this diagram of figure 5.

Like with the other diagrams, block 5 of figure 5 is followed by a series of other blocks defining, the means or measures (6) and the outcome (7). The supplies and inventories blocks, like the RBI company 211, the RBI services 212, the SPF SW License 213, the mechanical engineer 221, are linked to solution blocks like, the advanced mechanical engineer 322, the engineering information management solution 323, etc..., the whole structure of the diagram of figure 5 being clearly illustrated on that figure 5.

## Claims

1. Method for validating a project definition process according to which, one models the process using a determined graph which comprises, in series, a strategy block (1), a tactic block (4), at least one action block (5), a means block (6), a solution block (3), with a supply block (2) also being located upstream from the solution block (3), the action block (5) being also linked to an outcome block (7), and, in order to decide the validation, analysis is limited to each one of the blocks, thus shortening the time required for making a validation decision.

2. Method according to claim 1, wherein all blocks are intercorrelated.

3. Method according to claim 2, wherein one considers any block of the graph to start with prior to then navigating within the whole graph along any path.

4. Method according to one of claims 1 to 3, wherein the "supply" block (2) is broken down into the sub-blocks "suppliers" 21.1...21.n and "inventory" (22).

5. Method according to one of claims 1 to 4, wherein the tactic block (4) comprises a first center block (41) and is followed, downstream, by secondary tactic sub-blocks (42, 43), each followed by an action block (5).

6. Method according to claim 5, wherein each action block (5) comprises, in parallel, several series (51, 52) of action sub-blocks (51.1, 51.2, 51.3,..., 51.n), each of said sub-blocks is linked to a sub-block (7.1 ... 7.n) of the outcome block (7) and the means block (6) comprises sub-blocks (6.1 ...6.n) linked to the action sub-blocks (51.1 ... 51.n) and to the solution block (3).

7. Method according to one of claims 1 to 6, wherein an adaptation block (8) is inserted between the strategy block (1) and the tactic block (4) in order to monitor and to measure the adequacy of the tactic to the strategy of the project.

8. Method according to one of claims 1 to 7, wherein the strategy block (1) includes several strategy sub-blocks (11, 12, 13).

9. Method according to claim 8, wherein each strategy sub-block (11, 12, 13) includes several strategy underblocks (111, 112; 121, 122 123; 131-134).

10. Use of the method of one of claims 1 to 9 for an industrial process.

11. Use of the method of one of claims 1 to 9 for a non-technical process.
